# EUROPEAN PATENT SPECIFICATION

(11) **EP 4 039 602 B1**
(45) Date of publication and mention of the grant of the patent: **07.02.2024**
(21) Application number: 21754693.6
(22) Date of filing: 14.01.2021
(51) Int. Cl.: B65B 43/18, B65G 47/54, B65B 35/50, B65B 65/00, B65B 43/26, B65B 43/52, B65G 47/53, B65G 61/00

(54) **FULLY AUTOMATED UNPACKING, SEALING, AND PALLETIZING ALL-IN-ONE MACHINE**
VOLLAUTOMATISCHE ALL-IN-ONE-MASCHINE ZUM AUSPACKEN, VERSIEGELN UND PALETTIEREN
MACHINE TOUT-EN-UN ENTIÈREMENT AUTOMATISÉE DE DÉBALLAGE, SCELLEMENT ET PALETTISATION

(30) Priority: 31.10.2020 CN 202011199033
(43) Date of publication of application: 10.08.2022
(73) Proprietor: ZHEJIANG HOPING MACHINERY CO., LTD., Technology Industrial Zone Wenzhou Zhejiang 325200 (CN)
(72) Inventor: LI, Wenlei, Wenzhou, Zhejiang 325200 (CN); YANG, Yifu, Wenzhou, Zhejiang 325200 (CN); LI, Junjie, Wenzhou, Zhejiang 325200 (CN)
(74) Representative: Bayramoglu et al.
(86) International application number: PCT/CN2021/071666
(87) International publication number: WO 2022/088514

(56) References cited:
- EP-A2- 0 122 065
- WO-A1-2004/058604
- WO-A1-2016/039649
- CN-A- 106 927 076
- CN-A- 109 051 008
- CN-A- 110 510 397
- CN-A- 110 626 558
- CN-A- 110 683 381
- CN-A- 111 071 546
- CN-A- 111 806 813
- CN-A- 112 193 849
- CN-U- 204 078 830
- CN-U- 204 078 830
- CN-U- 206 345 083
- CN-U- 206 679 878
- CN-U- 208 103 828
- JP-B2- 6 348 322

## Description

### TECHNICAL FIELD

The present disclosure relates to the field of pharmaceutical carton packaging, and in particular to a fully-automatic unfolding, packing and palletizing machine for packing and palletizing pharmaceutical cartons.

### BACKGROUND

At present, cartons are typically strapped by a carton strapping machine and then packed into carton boxes by an unfolding and packing machine. After being packed, the strapped cartons need to be palletized and then transported by a forklift. The existing common palletizing method is to discharge the carton boxes transversely through a conveying mechanism and then palletize the carton boxes through a palletizing manipulator. This method, however, can only palletize the carton boxes to the front end of the conveying mechanism. In the event that two palletizing spaces are arranged on the left and right at the front end of the conveying mechanism, the palletizing manipulator cannot transition to the palletizing space on the right when the palletizing space on the left is full, and thus needs to resume operation until the carton boxes in the left palletizing space have been transported by the forklift. Obviously, this method disrupts the flow of operation, which directly affects efficiency. If the automatic carton packing equipment is designed to discharge continuously, this palletizing method cannot match such equipment normally. If two palletizing spaces are arranged front and back at the front end of the conveying mechanism, the forklift needs to transport the carton boxes in the front palletizing space from the front side and those in the back palletizing space from the back side. This method is not only very inconvenient for the forklift, but also requires a lot of space on the back side for the forklift to pass and adjust, which is obviously unreasonable for workshops with limited space. CN111806813A discloses an automatic packaging line for medicine bags. The automatic packaging line comprises a packaging line body. The packaging line body comprises a lifting conveying mechanism, a second-floor confluence conveying line and a first-floor confluence conveying line, wherein the second-floor confluence conveying line and the first-floor confluence conveying line are connected to an outlet and an inlet of the lifting conveying mechanism respectively. The second-floor confluence conveying line and the first-floor confluence conveying line are connected with a plurality of packaging assembly lines located on the first floor and the second floor of a plant respectively. Each packaging assembly line comprises a light inspection room manual feeding conveying line, wherein one end of the light inspection room manual feeding conveying line is connected with a turning conveying line, and one end of the turning conveying line is connected with a feeding port of a single-bag pillow packaging machine. CN110683381A discloses an automatic unstacking, stacking, vehicle-loading and vehicle-unloading system. WO2016/039649A1 discloses an automated carton transfer system. The system includes a delivery conveyor configured to convey a sequence of cartons. At least one pre-sort buffer conveyor configured to receive the sequence of cartons is provided, including a plurality of outfeed positions, at least one conveying device configured to move individual cartons received from the delivery conveyor along a series of loading positions aligned with the outfeed positions, at least one carton actuation device configured to move a selected carton from a loading position on the conveying device to a selected outfeed position. The system also includes a plurality of storage racks having a plurality of storage positions, at least one robotic storage and retrieval platform configured to load cartons from the outfeed positions and transport them to selected storage positions within the storage racks, and at least one controller configured to control operation of the pre-sort buffer conveyor and the at least one robotic storage and retrieval platform.

### SUMMARY

### Technical Problem

In view of the deficiencies in the prior art, the present disclosure provides a fully-automatic unfolding, packing and palletizing machine capable of arranging two non-interfering palletizing spaces on the left and right.

### Technical Solution

A fully-automatic unfolding, packing and palletizing machine includes an unfolding and packing machine and a carton box palletizing machine, the unfolding and packing machine including a carton conveying device, where the carton box palletizing machine includes a palletizing manipulator and a palletizing and conveying device; the palletizing and conveying device is located in front of the palletizing manipulator; the palletizing and conveying device includes a feeding transverse conveying mechanism; a feeding end of the feeding transverse conveying mechanism is connected to a discharging end of the carton box conveying device; one side of the feeding transverse conveying mechanism is provided with a transitioning transverse conveying mechanism; the transitioning transverse conveying mechanism and the feeding transverse conveying mechanism are connected in a conveying manner; one side of the transitioning transverse conveying mechanism is provided with a discharging longitudinal conveying mechanism; the discharging longitudinal conveying mechanism and the transitioning transverse conveying mechanism are connected in a conveying manner; the palletizing manipulator is configured to transfer cartons from the discharging longitudinal conveying mechanism to the first palletizing space and the second palletizing space; both the feeding transverse conveying mechanism and the discharging longitudinal conveying mechanism are located in front of the transitioning transverse conveying mechanism such that the transitioning transverse conveying mechanism is located between the palletizing manipulator and the discharging longitudinal conveying mechanism, wherein the first palletizing space is between one side of the discharging longitudinal conveying mechanism and the feeding transverse conveying mechanism; and the second palletizing space is on the other side of the discharging longitudinal conveying mechanism, such that the first palletizing space and the second palletizing space are distributed on two sides of a discharging point of the discharging longitudinal conveying mechanism.

Preferably, the transitioning transverse conveying mechanism and the feeding transverse conveying mechanism may be connected in a conveying manner by a first conveyor belt mechanism; the first conveyor belt mechanism may include a first conveyor belt; the feeding transverse conveying mechanism may include multiple feeding conveyor rollers; the transitioning transverse conveying mechanism may include multiple transitioning conveyor rollers; the first conveyor belt extends from a space between two feeding conveyor rollers to a space between two transitioning conveyor rollers; the first conveyor belt mechanism may be drivingly connected to a first lifting power source which drives the first conveyor belt mechanism to move up and down.

Preferably, the transitioning transverse conveying mechanism and the discharging longitudinal conveying mechanism may be connected in a conveying manner by a second conveyor belt mechanism; the second conveyor belt mechanism may include a second conveyor belt; the transitioning transverse conveyor mechanism may include multiple transitioning conveyor rollers; the second conveyor belt may be located between two transitioning conveyor rollers; the second conveyor belt mechanism may be drivingly connected to a second lifting power source which drives the second conveyor belt mechanism to move up and down.

Preferably, the carton box conveying device may include two synchronous conveying units arranged on the left and right; a carton box accommodating gap may be provided between the left and right synchronous conveying units; a supporting bottom plate may be provided between the left and right synchronous conveying units; the synchronous conveying units each may include two conveyor belt mechanisms arranged on the top and bottom; each of the conveyor belt mechanisms may include a conveyor belt; the conveyor belt may be provided with multiple equally spaced carton pushing members along a length direction of the conveyor belt.

Preferably, the unfolding and packing machine may include a carton conveying device; the carton conveying device has the same conveying direction as the carton box conveying device; a carton self-feeding, conveying and arranging device may be provided between the carton conveying device and the carton box conveying device; the carton self-feeding, conveying and arranging device may include a carton pushing mechanism, a sorting platform and a carton control mechanism; the carton control mechanism may include a left control plate and a right control plate for clamping cartons; a carton limiting mechanism may be provided above a front end of the carton conveying device; the carton limiting mechanism may include a front baffle and a front baffle power source which drives the front baffle to move forward and backward; the sorting platform may be located on one side of the carton conveying device; the carton pushing mechanism may include a pushing plate and a pushing plate power source which drives the pushing plate to push cartons on the carton conveying device to the sorting platform.

Preferably, the unfolding and packing machine may include a carton box storage bin; the carton box storage bin may include a bin frame; the bin frame may be provided with a feeding frame movable forward and backward; the feeding frame may be provided with two opposite supporting plate assemblies; each of the supporting plate assemblies may include a supporting plate and a supporting plate shaft; the supporting plate shaft may be rotatably installed on the feeding frame; the supporting plate may be connected on the supporting plate shaft; the supporting plate shaft may be connected to a connecting piece; the connecting piece may be connected to one end of a tension spring, and the other end of the tension spring may be connected on the feeding frame; the tension spring may drive the supporting plate to rotate inward; a feeding platform may be provided under the feeding frame; the feeding platform may be drivingly connected to a feeding power source which drives the feeding platform to move up and down.

Preferably, a carton box storage mechanism may be provided between the feeding frame and the feeding platform; the carton box storage mechanism may include two side baffles arranged on the front and back; each of the two side baffles may be provided with a storage plate assembly; the storage plate assembly may include a storage plate, a storage plate shaft and a storage plate power source which drives the storage plate shaft to rotate; the storage plate may be connected on the storage plate shaft; the storage plate has a first state of entering a space between the left and right side baffles and a second state of exiting the space between the left and right side baffles; the two storage plates arranged on the front and back may be opposite to each other.

Preferably, the unfolding and packing machine may include a carton box unfolding device; the carton box unfolding device may include a lifting mechanism and a side supporting mechanism; the side supporting mechanism may be located on one side of the lifting mechanism; the lifting mechanism may include a vacuum suction cup, a lifting arm and a lifting power source which drives the lifting arm to rotate up and down around a rotation point; the vacuum suction cup may be installed on the lifting arm; the side supporting mechanism may include a side supporting plate, a vertical post and a side supporting power source which drives the vertical post to rotate left and right around a rotation point; the side supporting plate may be connected on the vertical post; the lifting mechanism and the side supporting mechanism may be installed on a carton box conveying slide; the carton box conveying slide may be slidably provided on a frame; the carton box conveying slide may be drivingly connected to a carton box conveying power source which drives the carton box conveying slide to slide.

Preferably, a side cover unfolding device may be provided above the carton box conveying device; the side cover unfolding device may include a fixed base and an unfolding rod assembly; the unfolding rod assembly may include an unfolding rod, a small connecting rod and a roller; the unfolding rod may be provided with a connecting rod part and an actuating rod part; the connecting rod part and the actuating rod part define an included angle; the connecting rod part of the unfolding rod may be rotatably installed on the fixed base; the connecting rod part of the unfolding rod may be connected to one end of the small connecting rod, and the roller may be connected to the other end of the small connecting rod; the roller may be located in an elongated slot of a lifting block; the lifting block may be drivingly connected to a side cover unfolding power source which drives the lifting block to move up and down; the side cover unfolding power source may be installed on the fixed base.

Preferably, one side of the carton box conveying device may be provided with a partition storage bin; the partition storage bin may include a bin frame; the bin frame may be provided with two bin enclosing mechanisms arranged on the left and right; each of the bin enclosing mechanisms may include two bin enclosing assemblies arranged on the front and back; each of the bin enclosing assemblies may include a bin enclosing member and a trailing plate installed on the bin enclosing member; a partition lifting mechanism may be provided between the front and back bin enclosing assemblies of each of the bin enclosing mechanisms; the partition lifting mechanism may include a synchronous belt and two synchronous wheels; the synchronous belt may be wound on the synchronous wheels; the synchronous belt may be provided with a lifting piece; the synchronous wheels may be drivingly connected to a lifting power source which drives the synchronous wheels to rotate.

### Beneficial Effects

In the fully-automatic unfolding, packing and palletizing machine provided by the present disclosure, the carton boxes can be transitioned from transverse to longitudinal conveying on the carton box palletizing machine, thereby obtaining two non-interfering palletizing spaces on the left and right. In addition, the palletizing manipulator can continuously palletize carton boxes in these two palletizing spaces.

### BRIEF DESCRIPTION OF THE DRAWINGS

FIG. 1 is a top view of an unfolding and packing machine.
FIG. 2 is a stereoscopic view of a carton box palletizing machine.
FIG. 3 is a top view of the carton box palletizing machine.
FIG. 4 is a top view of a palletizing and conveying device.
FIG. 5 is a process flowchart of the unfolding and packing machine.
FIG. 6 is a view illustrating a structure of a carton box conveying device.
FIG. 7 is a front view of a conveyor belt of the carton box conveying device.
FIG. 8 is a stereoscopic view of a carton self-feeding, conveying and arranging device.
FIG. 9 is a stereoscopic view of a carton box storage bin.
FIG. 10 is a front view of a feeding frame of the carton box storage bin.
FIG. 11 is a front view of a carton box storage mechanism of the carton box storage bin.
FIG. 12 is a stereoscopic view of a carton box unfolding device.
FIG. 13 is a lateral view of the carton box unfolding device.
FIG. 14 is a view illustrating a working scene of a side cover unfolding device.
FIG. 15 is an exploded view of the side cover unfolding device.
FIG. 16 is a stereoscopic view of a partition storage bin.
FIG. 17 is a view illustrating an internal structure of the partition storage bin.
FIG. 18 is a view showing a structure of a bin enclosing mechanism of the partition storage bin.

### DETAILED DESCRIPTION OF THE EMBODIMENTS

### Implementations of the Disclosure

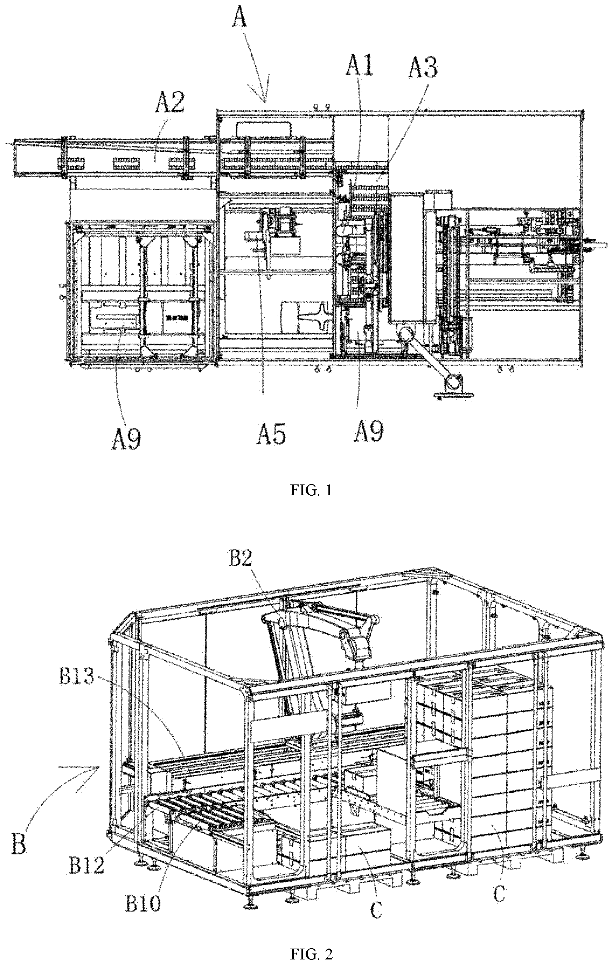

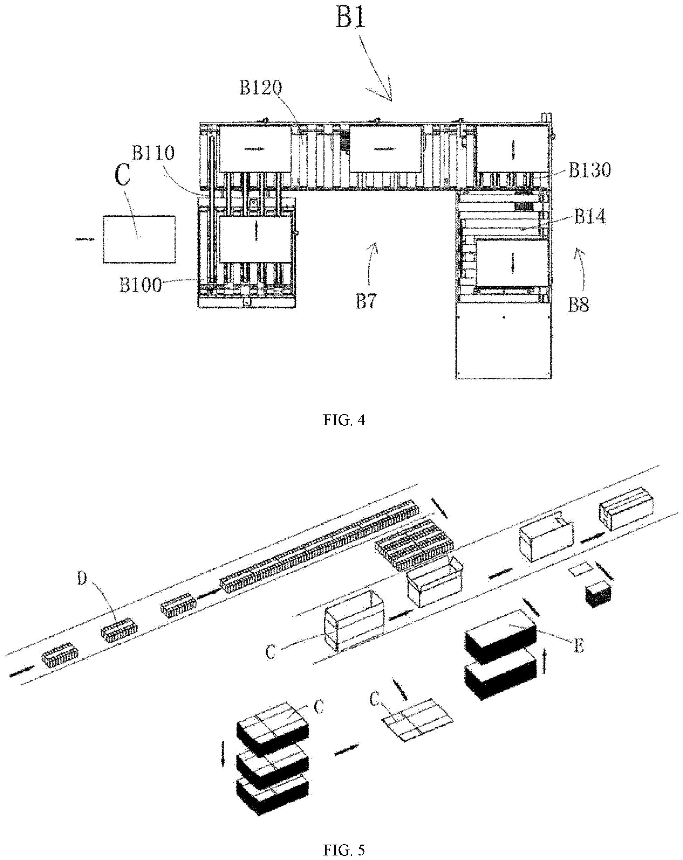

As shown in FIGS. 1 and 2, a fully-automatic unfolding, packing and palletizing machine includes an unfolding and packing machine A and a carton box palletizing machine B. As shown in FIG. 5, the unfolding and packing machine A is used to pack cartons into carton boxes, and the carton boxes C enter the carton palletizing machine B to be palletized.

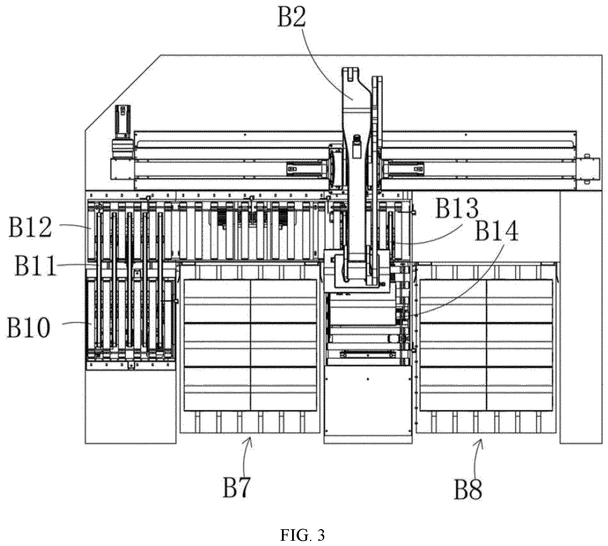

As shown in FIG. 1, the unfolding and packing machine A includes a carton box conveying device A1. When the carton boxes C are conveyed on the carton box conveying device A1, the packing of the cartons is completed. As shown in FIG. 2, the carton box palletizing machine B includes a palletizing manipulator B2 and a palletizing and conveying device B1. The palletizing and conveying device B1 is located in front of the palletizing manipulator B2. The palletizing and conveying device B1 includes a feeding transverse conveying mechanism B10. A feeding end of the feeding transverse conveying mechanism B10 is connected to a discharging end of the carton box conveying device A1. The carton box conveying device A1 conveys the carton boxes C packed with the cartons to the feeding transverse conveying mechanism B10 of the carton box palletizing machine B. As shown in FIGS. 3 and 4, one side of the feeding transverse conveying mechanism B10 is provided with a transitioning transverse conveying mechanism B12. The transitioning transverse conveying mechanism B12 and the feeding transverse conveying mechanism B10 are connected in a conveying manner. One side of the transitioning transverse conveying mechanism B12 is provided with a discharging longitudinal conveying mechanism B14. The discharging longitudinal conveying mechanism B14 and the transitioning transverse conveying mechanism B12 are connected in a conveying manner. A first palletizing space B7 is provided between one side of the discharging longitudinal conveying mechanism B14 and the feeding transverse conveying mechanism B10. A second palletizing space B8 is provided on the other side of the discharging longitudinal conveying mechanism B14.

On the palletizing and conveying device B1, the carton boxes C are transitioned from transverse conveying to longitudinal conveying, and finally come to the discharging longitudinal conveying mechanism B14. The discharging longitudinal conveying mechanism B14 is provided with the first palletizing space B7 on the left and the second palletizing space B8 on the right. The palletizing manipulator B2 palletizes the carton boxes C from the discharging longitudinal conveying mechanism B14 in the first palletizing space B7. After the first palletizing space B7 is full, the palletizing manipulator B2 palletizes the carton boxes C from the discharging longitudinal conveying mechanism B14 in the second palletizing space B8. Since the first palletizing space B7 and the second palletizing space B8 are distributed on two sides of a discharging point, the palletizing manipulator B2 will not be interfered when transitioning from one palletizing space to the other palletizing space, and the palletizing manipulator B2 can work continuously. In addition, due to the layout of the palletizing spaces, the discharging direction of the unfolding and packing machine A is on the same transverse line with the two palletizing spaces of the carton box palletizing machine B, and the whole machine is only lengthened in the transverse direction. This is in full compliance with the design specifications of the whole machine. The forklift only needs to be operated on the front side of the carton box palletizing machine without going to the back side thereof, which greatly facilitates forklift transportation.

As described above, the transitioning transverse conveying mechanism B12 and the feeding transverse conveying mechanism B10 are connected in a conveying manner. Thus, the carton boxes C on the feeding transverse conveying mechanism B10 can be conveyed to the transitioning transverse conveying mechanism B12. There are many ways to transport the carton boxes from the feeding transverse conveying mechanism B10 to the transitioning transverse conveying mechanism B12. For example, a push plate is driven by an air cylinder to push the carton boxes from the feeding transverse conveying mechanism B10 to the transitioning transverse conveying mechanism B12. For example, a conveyor belt is provided above, and multiple push blocks are equally spaced along a length direction of the conveyor belt. The conveyor belt is driven longitudinally, and the carton boxes come before the push blocks. Through the conveyance of the conveyor belt, the push blocks push the carton boxes to the transitioning transverse conveying mechanism B12. For example, a manipulator is provided to transfer the carton boxes from the feeding transverse conveying mechanism B10 to the transitioning transverse conveying mechanism B12.

However, the structures in the above methods are not compact, occupy a large space, and are costly. In view of this, the present disclosure further provides a method for realizing the conveying connection by a first conveyor belt mechanism B11. As shown in the figure, the first conveyor belt mechanism B11 includes a first conveyor belt B110. The feeding transverse conveying mechanism B10 includes multiple feeding conveyor rollers B100. The transitioning transverse conveying mechanism B12 includes multiple transitioning conveyor rollers B120. The first conveyor belt B110 extends from a space between two feeding conveyor rollers B100 to a space between two transitioning conveyor rollers B120. The first conveyor belt mechanism B11 is drivingly connected to a first lifting power source which drives the first conveyor belt mechanism B11 to move up and down. When the carton boxes enter the feeding transverse conveying mechanism B10, the first lifting power source drives the first conveyor belt mechanism B11 to rise, such that the first conveyor belt B110 carries the carton boxes. The first conveyor belt B110 conveys the carton boxes to an upper side of the transitioning transverse conveying mechanism B12. Then the first lifting power source drives the first conveyor belt mechanism B11 to descend, such that the carton boxes fall to the transitioning conveyor rollers B120 of the transitioning transverse conveying mechanism B12. The transitioning transverse conveying mechanism B12 conveys the carton boxes forward through the transitioning conveyor rollers B120.

The transitioning transverse conveying mechanism B12 and the discharging longitudinal conveying mechanism B14 are connected in a conveying manner. Thus, the carbon boxes on the transitioning transverse conveying mechanism B12 can be conveyed to the discharging longitudinal conveying mechanism B14. There are also many ways to transport the carton boxes from the transitioning transverse conveying mechanism B12 to the discharging longitudinal conveying mechanism B14, which are the same as those to transport the carton boxes from the feeding transverse conveying mechanism B10 to the transitioning transverse conveying mechanism B12, and will not be repeated here.

Similarly, the transitioning transverse conveying mechanism B12 and the discharging longitudinal conveying mechanism B14 are connected in a conveying manner by a second conveyor belt mechanism B13. The second conveyor belt mechanism B13 includes a second conveyor belt B130. The transitioning transverse conveyor mechanism B12 includes multiple transitioning conveyor rollers B120. The second conveyor belt B130 is located between two transitioning conveyor rollers B120. The second conveyor belt mechanism B13 is drivingly connected to a second lifting power source which drives the second conveyor belt mechanism B13 to move up and down. When the carton boxes enter a tail end of the transitioning transverse conveying mechanism B12, the second lifting power source drives the second conveyor belt mechanism B13 to rise, such that the second conveyor belt B130 carries the carton boxes. The second conveyor belt B130 conveys the carton boxes to a front end of the discharging longitudinal conveying mechanism B14. Then the second lifting power source drives the second conveyor belt mechanism B13 to descend, such that the carton boxes fall to the discharging longitudinal conveying mechanism B14. The discharging longitudinal conveying mechanism B14 conveys the carton boxes longitudinally.

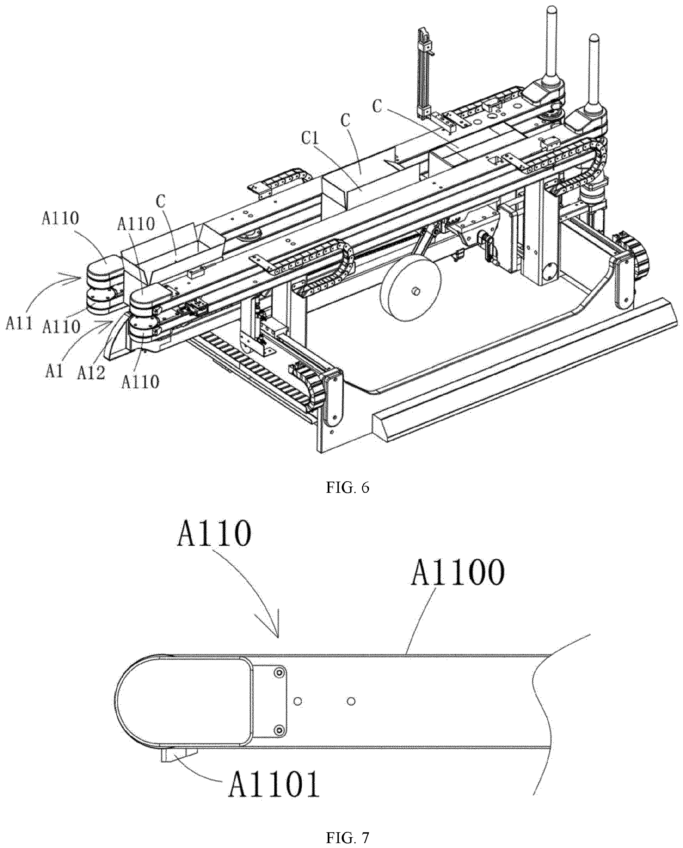

As shown in FIG. 6, the carton box conveying device A1 of the unfolding and packing machine A includes two synchronous conveying units A11 arranged on the left and right. A carton box C accommodating gap is provided between the left and right synchronous conveying units A11. A supporting bottom plate A12 is provided between the left and right synchronous conveying units A11. The synchronous conveying units A11 each include conveyor belt mechanisms A110. As shown in FIG. 7, each of the conveyor belt mechanisms A110 includes a conveyor belt A1100. The conveyor belt A1100 is provided with multiple equally spaced carton pushing members A1101 along a length direction of the conveyor belt.

The conveyance principle is as follows. As shown in FIG. 6, when the carton boxes C enter between the left and right synchronous conveying units A11, the supporting bottom plate A12 supports the carton boxes C from the bottom. The conveyor belts A1100 of the left and right synchronous conveying units A11 rotate synchronously, and the carton pushing members A1101 on the conveyor belt A1100 push the carton boxes C forward from the back side of the carton boxes C. The structure of this conveying method is reasonable. The carton pushing members A1101 give the carton boxes C a stable pushing force. By calculating the position of the carton pushing members A1101, an equipment control system can know the position of the carton boxes. Therefore, the precise action of a carton box cover closing mechanism can be controlled without a sensor, which greatly simplifies the equipment structure, reduces the manufacturing cost, and avoids adjusting the position of the sensor when the specification of the carton boxes changes.

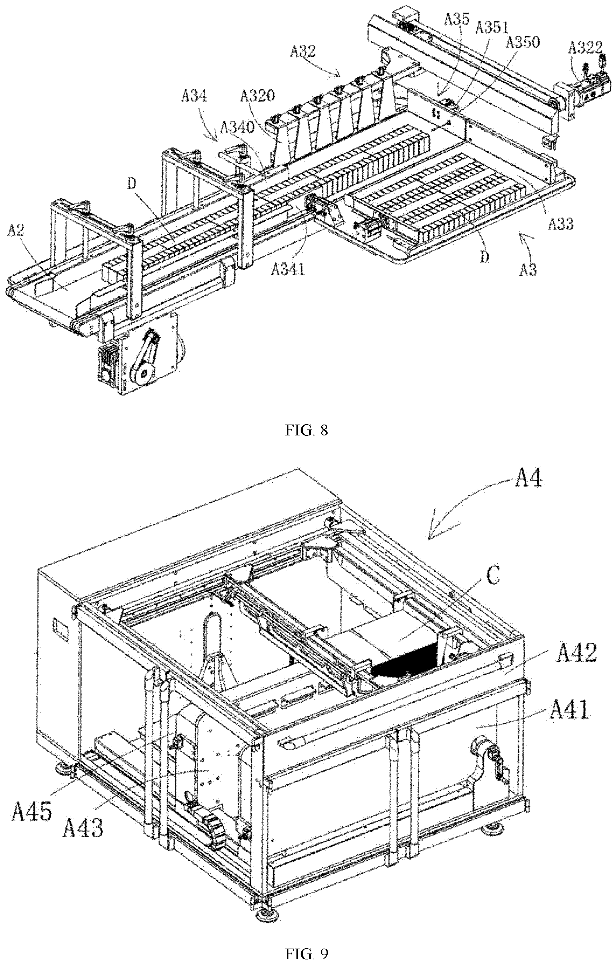

As shown in FIG. 8, the unfolding and packing machine A includes a carton conveying device A2. The carton conveying device A2 has the same conveying direction as the carton box conveying device A1. A carton self-feeding, conveying and arranging device A3 is provided between the carton conveying device A2 and the carton box conveying device A1. As shown in FIG. 8, the carton self-feeding, conveying and arranging device A3 includes a carton pushing mechanism A32, a sorting platform A33 and a carton control mechanism A34. The sorting platform A33 is located on one side of the carton conveying device A2. The carton pushing mechanism A32 includes a pushing plate A320 and a pushing plate power source A322 which drives the pushing plate A320 to push the cartons D on the carton conveying device A2 to the sorting platform A33. The carton conveying device A2 conveys the strapped cartons D to the front. When the cartons are accumulated to a certain amount, the pushing plate power source A322 drives the pushing plate A320 to move. The pushing plate A320 pushes a row of cartons from the carton conveying device A2 to the sorting platform A33. Through multiple such pushes, multiple rows of cartons are arranged on the sorting platform A33. Finally, the manipulator grabs the multiple rows of cartons D at one time and puts them into the carton boxes.

Due to the uninterrupted conveyance of the carton conveying device A2, the cartons adjacent on the front and back are close together. If the front row of cartons are pushed out directly, the last cartons will have resistance to the adjacent cartons, which will result in failure to separate normally. Therefore, in order to enable the front row of cartons to be smoothly pushed out, a carton control mechanism A34 is provided in the middle of the carton conveying device A2. The carton control mechanism A34 includes a left control plate A340 and a right control plate A341 for clamping the cartons D. A carton limiting mechanism A35 is provided above a front end of the carton conveying device A2. The carton limiting mechanism A35 includes a front baffle A350 and a front baffle power source A351 which drives the front baffle A350 to move forward and backward. The carton conveying device A2 runs continuously to convey rows of strapped cartons D forwards. The frontmost carton hits the front baffle A350, and then the left control plate A340 and the right control plate A341 of the carton control mechanism A34 clamp the middle cartons. Even if the carton conveying device A2 is still running, the clamped cartons and all the cartons behind will not move forward. The front baffle power source A351 of the carton limiting mechanism A35 drives the front baffle A350 to move backward, such that the cartons in the front row continue to move forward for a certain distance under the conveyance of the carton conveying device A2. In this way, the cartons in the front row are separated from the clamped cartons by a certain distance. Then the pushing plate power source A322 of the carton pushing mechanism A32 drives the pushing plate A320 to move the separated row of cartons to the sorting platform A33. In this way, multiple rows of cartons are smoothly pushed onto the sorting platform A33. Finally, the manipulator picks up the multiple rows of cartons at one time for packing.

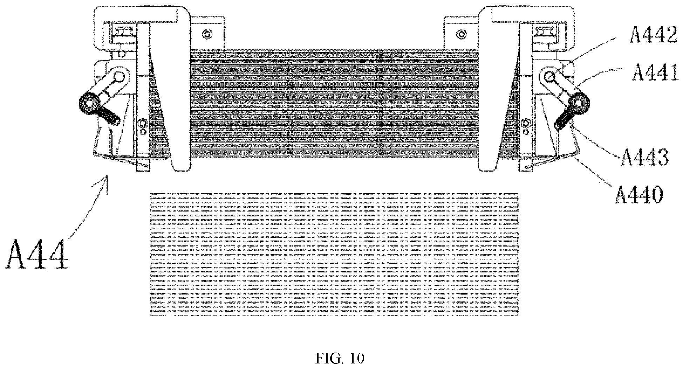

The unfolding and packing machine A includes a carton box storage bin A4. As shown in FIG. 9, the carton box storage bin A4 is used to store flat carton boxes C. A stack of flat carton boxes C are placed in the bin and sucked one by one by the manipulator. As shown in FIG. 9, the carton box storage bin A4 includes a bin frame A41. The bin frame A41 is provided with a feeding frame A42 movable forward and backward. As shown in FIG. 10, the feeding frame A42 is provided with two opposite supporting plate assemblies A44. Each of the supporting plate assemblies A44 includes a supporting plate A440 and a supporting plate shaft A442. The supporting plate shaft A442 is rotatably installed on the feeding frame A42. The supporting plate A440 is connected on the supporting plate shaft A442. The supporting plate shaft A442 is connected to a connecting piece A441. The connecting piece A441 is connected to one end of a tension spring A443, and the other end of the tension spring A443 is connected on the feeding frame A42. The tension spring A443 drives the supporting plate A440 to rotate inward. A feeding platform A45 is provided under the feeding frame A42. The feeding platform A45 is drivingly connected to a feeding power source which drives the feeding platform A45 to move up and down.

When the carton boxes need to be fed, the carton boxes C are placed on the feeding frame A42. As shown in FIG. 10, the tension springs A443 pull the supporting plates A440 to turn inward, such that the carton boxes C are placed on the supporting plates A440 on the two sides. Meanwhile, the tension springs A443 pull the supporting plates A440 so as to prevent the supporting plates A440 from rotating outward under the gravity of the carton boxes. When the carton boxes on the feeding platform A45 are used up, the supporting plate shafts A442 are rotated to turn the supporting plates A440 outward, such that the carton boxes C fall on the feeding platform A45 below. The feeding platform A45 is driven up and down by the feeding power source. Every time the manipulator sucks one carton box away, the feeding platform A45 rises by a height that is equivalent of the thickness of the carton box. The pickup point of the manipulator remains unchanged, and the carton boxes are picked up one by one. With this structure, an operator only needs to pull out the feeding frame A42, put the carton boxes on the feeding frame, and push the feeding frame in. When the carton boxes on the feeding platform A45 are used up, the supporting plate shaft A442 is controlled to rotate, such that the carton boxes fall on the feeding platform A45. The operation is very safe and convenient.

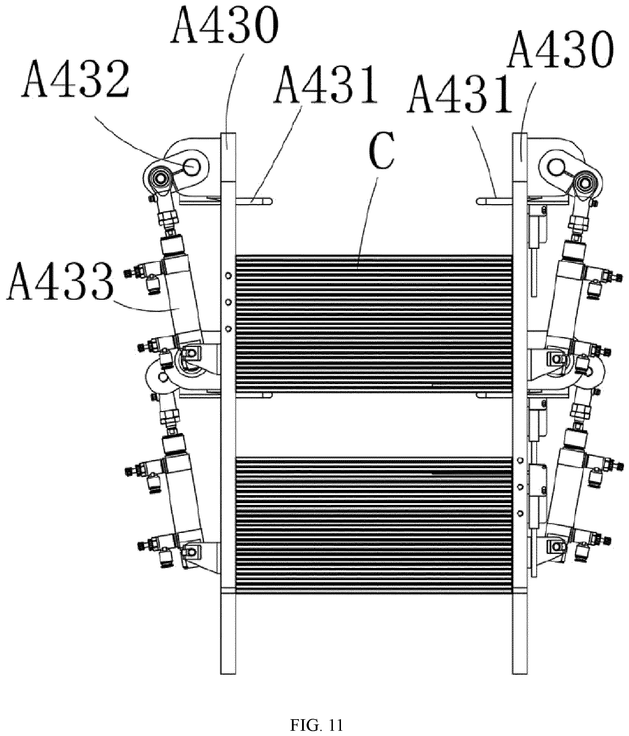

In order to store more carton boxes C, a carton box storage mechanism A43 is provided between the feeding frame A42 and the feeding platform A45. As shown in FIG. 9, the carton box storage mechanism A43 includes two side baffles A430 arranged on the front and back. Each of the two side baffles A430 is provided with a storage plate assembly. As shown in FIG. 11, the storage plate assembly includes a storage plate A431, a storage plate shaft A432 and a storage plate power source A433 which drives the storage plate shaft A432 to rotate. The storage plate A431 is connected on the storage plate shaft A432. Driven by the storage plate power source A433, the storage plate A431 has a first state of entering a space between the left and right side baffles A430 and a second state of exiting the space between the left and right side baffles A430. The two storage plates A431 arranged on the front and back are opposite to each other. If there are carton boxes on the feeding platform A45, the carton boxes placed on the feeding frame A42 first fall to the carton box storage mechanism A43. That is, the carton boxes fall on the left and right storage plates A431 for storage. When the carton boxes on the feeding platform A45 are used up, the storage plate power sources A433 drive the storage plates A431 to rotate, such that the carton boxes C fall on the feeding platform A45 below. Of course, the lowering of the carton boxes on the carton box storage mechanism A43 can be controlled manually. Alternatively, a sensor may be provided to sense and control the storage plate power source A433 to act. It is worth mentioning here that multiple carton box storage mechanisms A43 may be provided, that is, multiple storage plate assemblies may be arranged on the side baffles A430 in a vertical direction. In this way, the height of the carton box storage mechanism A43 can be increased, so as to store more carton boxes. As shown in the figure, there are two carton box storage mechanisms A43.

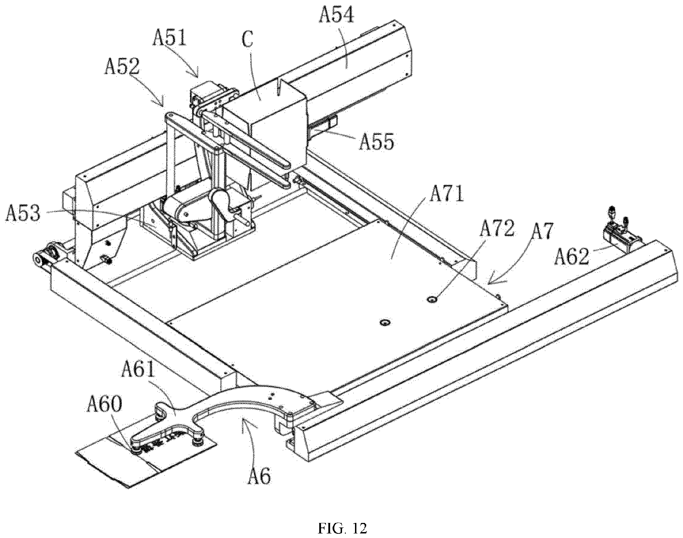

As shown in FIG. 12, the unfolding and packing machine A includes a carton box unfolding device A5. The carton box unfolding device A5 is used to unfold and send the carton boxes into the carton box conveying device A1. The carton box unfolding device A5 includes a lifting mechanism A51 and a side supporting mechanism A52. The side supporting mechanism A52 is located on one side of the lifting mechanism A51. The lifting mechanism A51 is used to lift the flat carton box C, and the side supporting mechanism A52 is used to support the carton box from a side, such that the carton box is opened into a three-dimensional structure to be closed.

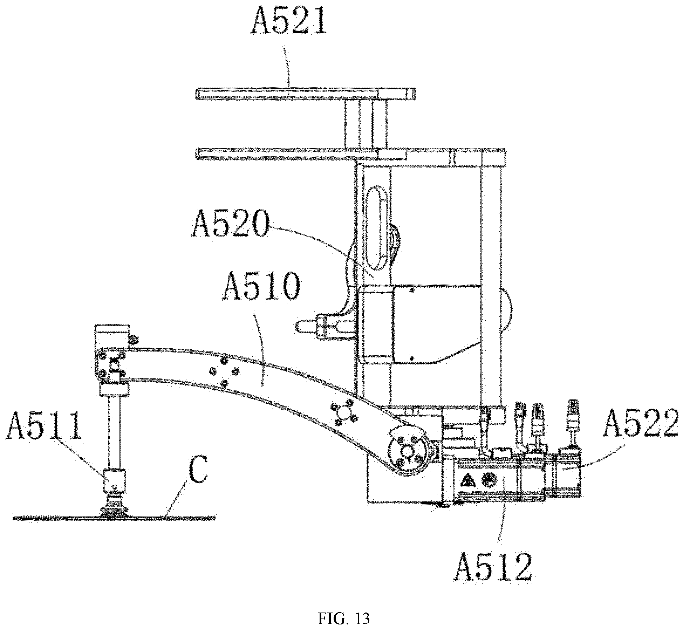

As shown in FIGS. 12 and 13, the lifting mechanism A51 includes a vacuum suction cup A511, a lifting arm A510 and a lifting power source A512 which drives the lifting arm A510 to rotate up and down around a rotation point. The vacuum suction cup A511 is installed on the lifting arm A510. The lifting power source A512 drives the lifting arm A510 to rotate around the rotation point, so the vacuum suction cup A511 on the lifting arm A510 sucks up the flat carton box. The carton box will gradually be unfolded under the action of gravity.

When the carton box is lifted, a force is applied to the side of the carton box, such that the carton box is opened into a three-dimensional shape after being completely lifted. Therefore, the side supporting mechanism A52 is located on one side of the lifting mechanism A51. As shown in FIGS. 12 and 13, the side supporting mechanism A52 includes a side supporting plate A521, a vertical post A520 and a side supporting power source A522 which drives the vertical post A520 to rotate left and right around a rotation point. The side supporting plate A521 is connected on the vertical post A520. Driven by the side supporting power source A522, the vertical post A520 rotates left and right around a rotation point, such that the side supporting plate A521 on the vertical post A520 acts on the side of the carton box. When the carton box is lifted, the side supporting plate A521 gives the carton box a supporting force from the side. When the carton box C is completely lifted, the carton box C is turned into a three-dimensional structure.

After the carton box C is opened into a three-dimensional shape, it needs to be sent to the next position. To this end, as shown in FIG. 12, the lifting mechanism A51 and the side supporting mechanism A52 are installed on a carton box conveying slide A53. The carton box conveying slide A53 is slidably provided on a frame. The carton box conveying slide A53 is drivingly connected to a carton box conveying power source A54 which drives the carton box conveying slide A53 to slide. Driven by the carton box conveying power source A54, the carton box conveying slide A53 moves. The carton box conveying slide A53 carries the lifting mechanism A51 to move with the side supporting mechanism A52, such that the carton box C is sent into the carton box conveying device A1. Of course, a suction nozzle mechanism may be provided. The lifting mechanism A51 releases the carton box, and the suction nozzle mechanism conveys the carton box to the carton box conveying device A1.

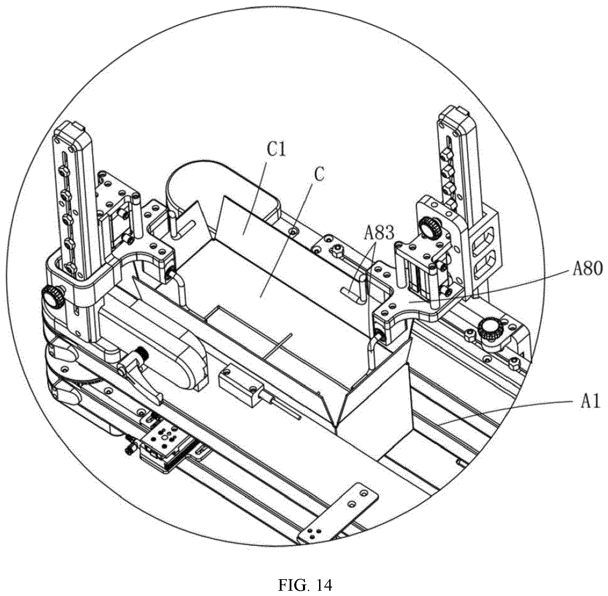

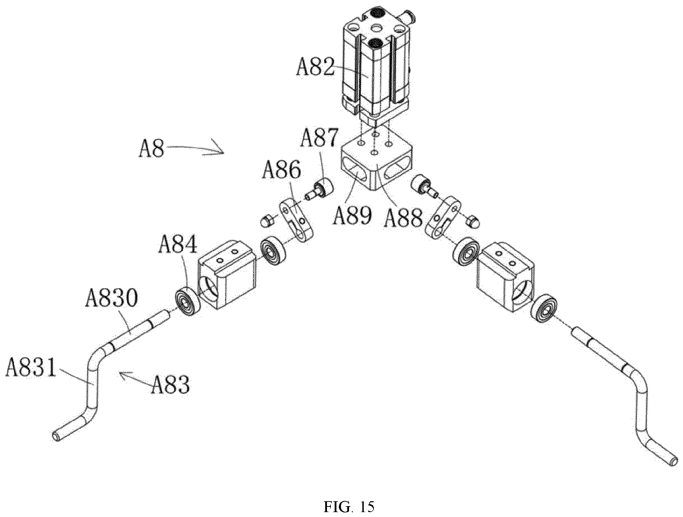

As shown in FIG. 14, when the carton box C is conveyed by the carton box conveying device A1, four side covers C1 on the top of the carton box C need to be unfolded. Therefore, the side cover unfolding device A8 is further provided above the carton box conveying device A1. The side cover unfolding device A8 unfolds the four side covers A of the carton box C, and then the manipulator grabs and puts the cartons D into the carton box C. As shown in FIG. 14, the side cover unfolding device A8 includes a fixed base A80 and an unfolding rod A83 assembly. As shown in FIG. 15, the unfolding rod A83 assembly includes an unfolding rod A83, a small connecting rod A86 and a roller A87. The unfolding rod A83 is provided with a connecting rod part A830 and an actuating rod part A831. The connecting rod part A830 and the actuating rod part A831 define an included angle. The connecting rod part A830 of the unfolding rod A83 is rotatably installed on the fixed base A80. The connecting rod part A830 of the unfolding rod A83 is connected to one end of the small connecting rod A86, and the roller A87 is connected to the other end of the small connecting rod A86. The roller A87 is located in an elongated slot A89 of a lifting block A88. The lifting block A88 is drivingly connected to a side cover unfolding power source A82 which drives the lifting block A88 to move up and down. The side cover unfolding power source A82 is installed on the fixed base A80.

The principle of operation is as follows. As shown in FIG. 15, the side cover unfolding power source A82 drives the lifting block A88 up and down. The lifting block A88 drives the small connecting rod A86 to rotate through the roller A87, and the small connecting rod A86 drives the unfolding rod A83 to rotate. The unfolding rod A83 is provided with a connecting rod part A830 and an actuating rod part A831, and the connecting rod part A830 and the actuating rod part A831 define an included angle. In this way, the connecting rod part A830 of the unfolding rod A83 rotates, and the actuating rod part A831 of the unfolding rod A83 moves up and down. When the actuating rod part A831 of the unfolding rod A83 moves downward, the actuating rod part A831 of the unfolding rod A83 unfolds the side covers C1 of the carton box. When the actuating rod part A831 of the unfolding rod A83 moves upward, the actuating rod part A831 of the unfolding rod A83 no longer unfolds the side covers of the carton box, such that the side covers C1 of the carton box can be closed.

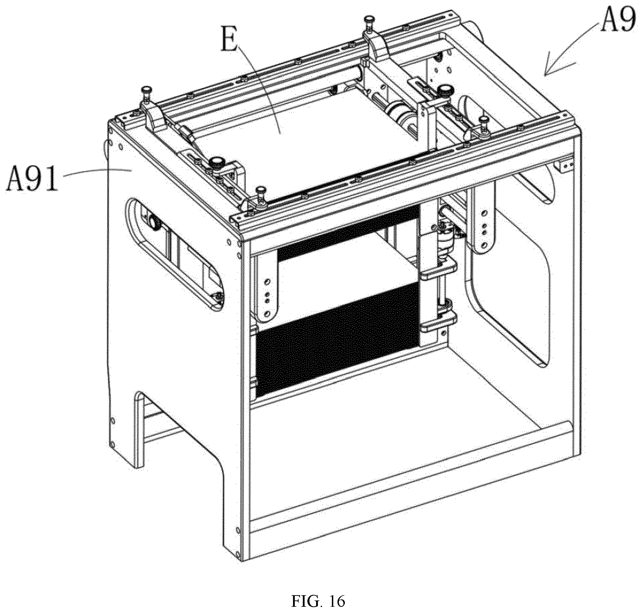

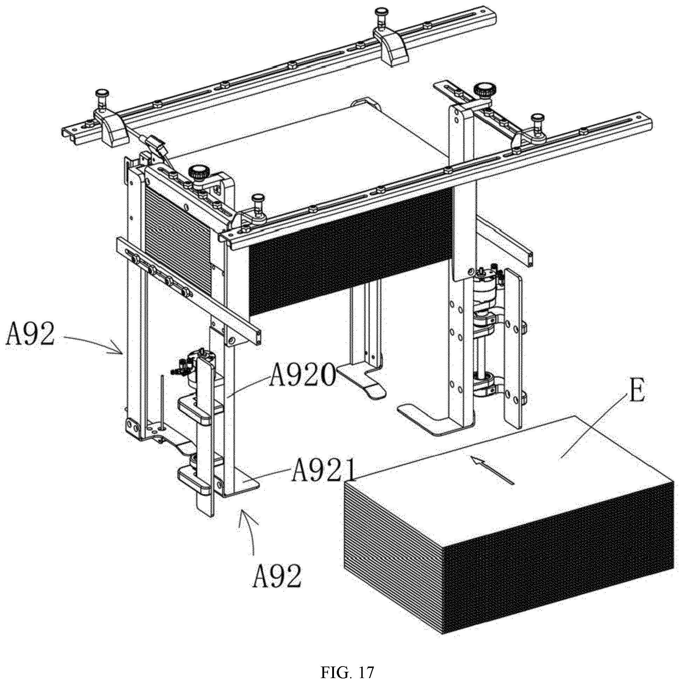

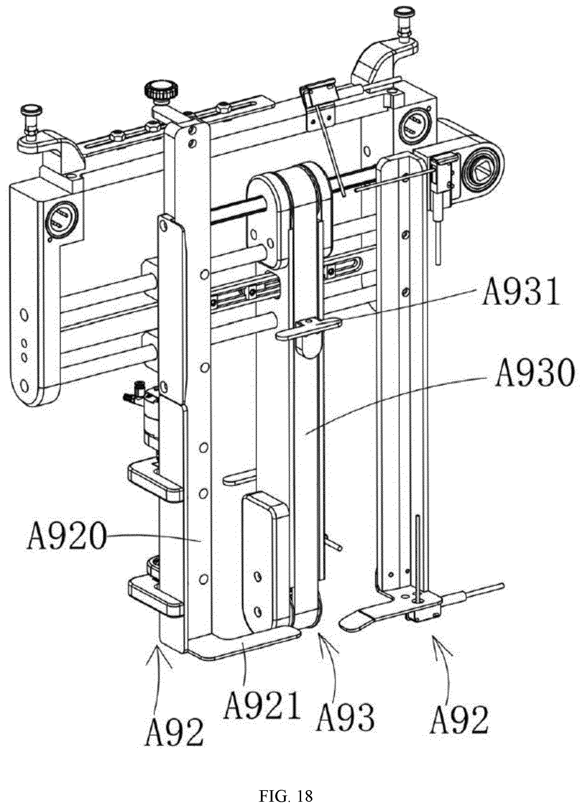

As shown in FIG. 5, after the cartons are placed in the carton box C, the multi-layer cartons D need to be separated by using a partition E. To this end, the unfolding and packing machine A includes a partition storage bin A9. As shown in FIG. 16, the partition storage bin A9 includes a bin frame A91. As shown in FIG. 17, the bin frame A91 is provided with two bin enclosing mechanisms arranged on the left and right. Each of the bin enclosing mechanisms includes two bin enclosing assemblies A92 arranged on the front and back. Each of the bin enclosing assemblies A92 includes a bin enclosing member A920 and a trailing plate A921 installed on the bin enclosing member A920. As shown in FIG. 17, a stack of partitions are placed on four trailing plates A921 of four bin enclosing assemblies A92 after entering the bin. In order to lift the placed partitions E upward gradually, as shown in FIG. 18, a partition lifting mechanism A93 is provided between the front and back bin enclosing member A920 assemblies of each of the bin enclosing mechanisms. As shown in FIG. 18, the partition lifting mechanism A93 includes a synchronous belt A930 and two synchronous wheels. The synchronous belt A930 is wound on the synchronous wheels. The synchronous belt A930 is provided with a lifting piece A931. The synchronous wheels are drivingly connected to a lifting power source which drives the synchronous wheels to rotate. After the partitions E are placed, the lifting power source drives the synchronous belt A930 to rotate. The lifting piece A931 located on the synchronous belt A930 lifts the partitions E from the bottom. Each time when the manipulator removes a partition, the lifting piece A931 lifts the partitions E by a height that is equivalent of the thickness of the partition. This method ensures that the uppermost partition in the bin is always in the suction position of the manipulator. In the partition storage bin A9 of this structure, a manual discharging space is designed in a lower part of the bin, thereby effectively avoiding the safety problem caused to the operation of the personnel when the packing machine runs and the manipulator absorbs the partition. In addition, this structure avoids the problem of wasting time. In the past, when the operator fed the partition, the packing machine was stopped so as to guarantee the safety of the operator, which wasted time. Therefore, by configuring the partition storage bin A9, the present disclosure can significantly increase the production efficiency of the equipment, and ensure the reliability of the linkage between the front and back equipment and the packing machine.

## Claims

1. A fully-automatic unfolding, packing and palletizing machine, comprising an unfolding and packing machine (A) and a carton box palletizing machine (B), wherein the unfolding and packing machine (A) comprises a carton box conveying device (A1); the carton box palletizing machine (B) comprises a palletizing manipulator (B2) and a palletizing and conveying device (B1); the palletizing and conveying device (B1) is located in front of the palletizing manipulator (B2); the palletizing and conveying device (B1) comprises a feeding transverse conveying mechanism (B10); a feeding end of the feeding transverse conveying mechanism (B10) is connected to a discharging end of the carton box conveying device (A1); one side of the feeding transverse conveying mechanism (B10) is provided with a transitioning transverse conveying mechanism (B12); the transitioning transverse conveying mechanism (B12) and the feeding transverse conveying mechanism (B10) are connected in a conveying manner; one side of the transitioning transverse conveying mechanism (B12) is provided with a discharging longitudinal conveying mechanism (B14); the discharging longitudinal conveying mechanism (B14) and the transitioning transverse conveying mechanism (B12) are connected in a conveying manner; a first palletizing space (B7) and a second palletizing space (B8) are provided; the palletizing manipulator (B2) is configured to transfer carton boxes from the discharging longitudinal conveying mechanism (B14) to the first palletizing space (B7) and the second palletizing space (B8)
**characterized in that,**
both the feeding transverse conveying mechanism (B10) and the discharging longitudinal conveying mechanism (B14) are located in front of the transitioning transverse conveying mechanism (B12) such that the transitioning transverse conveying mechanism (B12) is located between the palletizing manipulator (B2) and the discharging longitudinal conveying mechanism (B14),
wherein the first palletizing space (B7) is between one side of the discharging longitudinal conveying mechanism (B14) and the feeding transverse conveying mechanism (B10); and the second palletizing space (B8) is on the other side of the discharging longitudinal conveying mechanism (B14), such that the first palletizing space (B7) and the second palletizing space (B8) are distributed on two sides of a discharging point of the discharging longitudinal conveying mechanism (B14).

2. The fully-automatic unfolding, packing and palletizing machine according to claim 1, **characterized in that**, the transitioning transverse conveying mechanism (B12) and the feeding transverse conveying mechanism (B10) are connected in a conveying manner by a first conveyor belt mechanism (B11); the first conveyor belt mechanism (B11) comprises a first conveyor belt (B110); the feeding transverse conveying mechanism (B10) comprises multiple feeding conveyor rollers (B100); the transitioning transverse conveying mechanism (B12) comprises multiple transitioning conveyor rollers (B120); the first conveyor belt (B110) extends from a space between two feeding conveyor rollers (B100) to a space between two transitioning conveyor rollers (B120); the first conveyor belt mechanism (B11) is drivingly connected to a first lifting power source, and the first lifting power source drives the first conveyor belt mechanism (B11) to move up and down.

3. The fully-automatic unfolding, packing and palletizing machine according to claim 1, **characterized in that**, the transitioning transverse conveying mechanism (B12) and the discharging longitudinal conveying mechanism (B14) are connected in a conveying manner by a second conveyor belt mechanism (B13); the second conveyor belt mechanism (B13) comprises a second conveyor belt (B130); the transitioning transverse conveyor mechanism (B12) comprises multiple transitioning conveyor rollers (B120); the second conveyor belt (B130) is located between two transitioning conveyor rollers (B120); the second conveyor belt mechanism (B13) is drivingly connected to a second lifting power source, and the second lifting power source drives the second conveyor belt mechanism (B13) to move up and down.

4. The fully-automatic unfolding, packing and palletizing machine according to claim 1, **characterized in that**, the carton box conveying device (A1) comprises two synchronous conveying units (A11) arranged left and right; a carton box accommodating gap is provided between the left and right synchronous conveying units (A11); a supporting bottom plate (A12) is provided between the left and right synchronous conveying units (A11); the synchronous conveying units (A11) each comprise two conveyor belt mechanisms (A110) arranged on a top and a bottom; each of the conveyor belt mechanisms (A110) comprises a conveyor belt (A1100); the conveyor belt (A1100) is provided with multiple equally spaced carton pushing members (A1101) along a length direction of the conveyor belt (A1100).

5. The fully-automatic unfolding, packing and palletizing machine according to claim 1, **characterized in that**, the unfolding and packing machine (A) comprises a carton conveying device (A2); the carton conveying device (A2) has the same conveying direction as the carton box conveying device (A1); a carton self-feeding, conveying and arranging device (A3) is provided between the carton conveying device (A2) and the carton box conveying device (A1); the carton self-feeding, conveying and arranging device (A3) comprises a carton pushing mechanism (A32), a sorting platform (A33) and a carton control mechanism (A34); the carton control mechanism (A34) comprises a left control plate (A340) and a right control plate (A341) for clamping cartons; a carton limiting mechanism (A35) is provided above a front end of the carton conveying device (A2); the carton limiting mechanism (A35) comprises a front baffle (A350) and a front baffle power source (A351), and the front baffle power source (A351) drives the front baffle (A350) to move forward and backward; the sorting platform (A33) is located on one side of the carton conveying device (A2); the carton pushing mechanism (A32) comprises a pushing plate (A320) and a pushing plate power source (A322), and the pushing plate power source (A322) drives the pushing plate (A320) to push cartons on the carton conveying device (A2) to the sorting platform (A33).

6. The fully-automatic unfolding, packing and palletizing machine according to claim 1, **characterized in that**, the unfolding and packing machine (A) comprises a carton box storage bin (A4); the carton box storage bin (A4) comprises a bin frame (A41); the bin frame (A41) is provided with a feeding frame (A42) movable forward and backward; the feeding frame (A42) is provided with two opposite supporting plate assemblies (A44); each of the supporting plate assemblies (A44) comprises a supporting plate (A440) and a supporting plate shaft (A442); the supporting plate shaft (A442) is rotatably installed on the feeding frame (A42); the supporting plate (A440) is connected on the supporting plate shaft (A442); the supporting plate shaft (A442) is connected to a connecting piece (A441); the connecting piece (A441) is connected to one end of a tension spring (A443), and the other end of the tension spring (A443) is connected on the feeding frame (A42); the tension spring (A443) drives the supporting plate (A440) to rotate inward; a feeding platform (A45) is provided under the feeding frame (A42); the feeding platform (A45) is drivingly connected to a feeding power source, and the feeding power source drives the feeding platform (A45) to move up and down.

7. The fully-automatic unfolding, packing and palletizing machine according to claim 6, **characterized in that**, a carton box storage mechanism (A43) is provided between the feeding frame (A42) and the feeding platform (A45); the carton box storage mechanism (A43) comprises two side baffles (A430) arranged front and back; each of the two side baffles (A430) is provided with a storage plate assembly; the storage plate assembly comprises a storage plate (A431), a storage plate shaft (A432) and a storage plate power source (A433), and the storage plate power source (A433) drives the storage plate shaft (A432) to rotate; the storage plate (A431) is connected on the storage plate shaft (A432); the storage plate (A431) has a first state of entering a space between the left and right side baffles (A430) and a second state of exiting the space between the left and right side baffles (A430); the two storage plates (A431) arranged front and back are opposite to each other.

8. The fully-automatic unfolding, packing and palletizing machine according to claim 1, **characterized in that**, the unfolding and packing machine (A) comprises a carton box unfolding device (A5); the carton box unfolding device (A5) comprises a lifting mechanism (A51) and a side supporting mechanism (A52); the side supporting mechanism (A52) is located on one side of the lifting mechanism (A51); the lifting mechanism (A51) comprises a vacuum suction cup (A511), a lifting arm (A510) and a lifting power source (A512), and the lifting power source (A512) drives the lifting arm (A510) to rotate up and down around a rotation point; the vacuum suction cup (A511) is installed on the lifting arm (A510); the side supporting mechanism (A52) comprises a side supporting plate (A521), a vertical post (A520) and a side supporting power source (A522), and the side supporting power source (A522) drives the vertical post (A520) to rotate left and right around a rotation point; the side supporting plate (A521) is connected on the vertical post (A520); the lifting mechanism (A51) and the side supporting mechanism (A52) are installed on a carton box conveying slide (A53); the carton box conveying slide (A53) is slidably provided on a frame; the carton box conveying slide (A53) is drivingly connected to a carton box conveying power source (A54), and the carton box conveying power source (A54) drives the carton box conveying slide (A53) to slide.

9. The fully-automatic unfolding, packing and palletizing machine according to claim 1, **characterized in that**, a side cover unfolding device (A8) is provided above the carton box conveying device (A1); the side cover unfolding device (A8) comprises a fixed base (A80) and an unfolding rod assembly; the unfolding rod assembly comprises an unfolding rod (A83), a small connecting rod (A86) and a roller (A87); the unfolding rod (A83) is provided with a connecting rod part (A830) and an actuating rod part (A831); the connecting rod part (A830) and the actuating rod part (A831) define an included angle; the connecting rod part (A830) of the unfolding rod (A83) is rotatably installed on the fixed base (A80); the connecting rod part (A830) of the unfolding rod (A83) is connected to one end of the small connecting rod (A86), and the roller (A87) is connected to the other end of the small connecting rod (A86); the roller (A87) is located in an elongated slot (A89) of a lifting block (A88); the lifting block (A88) is drivingly connected to a side cover unfolding power source (A82), and the side cover unfolding power source (A82) drives the lifting block (A88) to move up and down; the side cover unfolding power source (A82) is installed on the fixed base (A80).

10. The fully-automatic unfolding, packing and palletizing machine according to claim 1, **characterized in that**, one side of the carton box conveying device (A1) is provided with a partition storage bin (A9); the partition storage bin (A9) comprises a bin frame (A91); the bin frame (A91) is provided with two bin enclosing mechanisms arranged left and right; each of the bin enclosing mechanisms comprises two bin enclosing assemblies (A92) arranged front and back; each of the bin enclosing assemblies (A92) comprises a bin enclosing member (A920) and a trailing plate (A921), and the trailing plate (A921) is installed on the bin enclosing member (A920); a partition lifting mechanism (A93) is provided between the front and back bin enclosing assemblies (A92) of each of the bin enclosing mechanisms; the partition lifting mechanism (A93) comprises a synchronous belt (A930) and two synchronous wheels; the synchronous belt (A930) is wound on the synchronous wheels; the synchronous belt (A930) is provided with a lifting piece (A931); the synchronous wheels are drivingly connected to a lifting power source, and the lifting power source drives the synchronous wheels to rotate.

## Patentansprüche

1. Eine vollautomatische Auffalt-, Verpackungs- und Palettiermaschine, bestehend aus einer Auffalt- und Verpackungsmaschine (A) und einer Kartonpalettiermaschine (B), wobei die Auffalt- und Verpackungsmaschine (A) eine Kartonbox-Fördervorrichtung (A1) umfasst; die Kartonpalettiermaschine (B) umfasst einen Palettiermanipulator (B2) sowie eine Palettier- und Fördervorrichtung (B1); die Palettier- und Fördervorrichtung (B1) befindet sich vor dem Palettiermanipulator (B2); die Palettier- und Fördervorrichtung (B1) umfasst einen Zufuhr-Querfördermechanismus (B10), ein Zufuhr-Ende des Zufuhr-Querfördermechanismus (B10) ist mit einem Ausgabe-Ende der Kartonbox-Fördervorrichtung (A1) verbunden; eine Seite des Zufuhr-Querfördermechanismus (B10) ist mit einem Übergangs-Querfördermechanismus (B12) versehen; der Übergangs-Querfördermechanismus (B12) und der Zufuhr-Querfördermechanismus (B10) sind fördernd miteinander verbunden; eine Seite des Übergangs-Querfördermechanismus (B12) ist mit einem Abgabe-Längsfördermechanismus (B14) versehen; der Abgabe-Längsfördermechanismus (B14) und der Übergangs-Querfördermechanismus (B12) sind fördernd miteinander verbunden; ein erster Palettierplatz (B7) und ein zweiter Palettierplatz (B8) sind vorgesehen; der Palettiermanipulator (B2) ist konfiguriert, um Kartons vom Abgabe-Längsfördermechanismus (B14) zum ersten Palettierplatz (B7) und zum zweiten Palettierplatz (B8) zu übertragen
**gekennzeichnet dadurch,**
**dass** sowohl der Zufuhr-Querfördermechanismus (B10) als auch der Abgabe-Längsfördermechanismus (B14) vor dem Übergangs-Querfördermechanismus (B12) angeordnet sind, so dass der Übergangs-Querfördermechanismus (B 12) zwischen dem Palettiermanipulator (B2) und dem Abgabe-Längsfördermechanismus (B14) liegt,
wobei der erste Palettierplatz (B7) zwischen einer Seite des Abgabe-Längsfördermechanismus (B14) und dem Zufuhr-Querfördermechanismus (B10) liegt; und der zweite Palettierplatz (B8) sich auf der anderen Seite des Abgabe-Längsfördermechanismus (B14) befindet, so dass der erste Palettierplatz (B7) und der zweite Palettierplatz (B8) auf zwei Seiten eines Abgabepunktes des Abgabe-Längsfördermechanismus (B14) verteilt sind.

2. Die vollautomatische Auffalt-, Verpackungs- und Palettiermaschine nach Anspruch 1, **gekennzeichnet dadurch, dass** der Übergangs-Querfördermechanismus (B12) und der Zufuhr-Querfördermechanismus (B10) fördernd durch einen ersten Förderbandmechanismus (B 11) verbunden sind; der erste Förderbandmechanismus (B11) umfasst ein erstes Förderband (B 110); der Zufuhr-Querfördermechanismus (B10) umfasst mehrere Zufuhr-Förderrollen (B100); der Übergangs-Querfördermechanismus (B12) umfasst mehrere Übergangs-Förderrollen (B120); das erste Förderband (B110) erstreckt sich von einem Raum zwischen zwei Zufuhr-Förderrollen (B100) bis zu einem Raum zwischen zwei Übergangs-Förderrollen (B120); der erste Förderbandmechanismus (B11) ist mit einer ersten Hubkraftquelle verbunden, und die erste Hubkraftquelle bewegt den ersten Förderbandmechanismus (B11) auf und ab.

3. Die vollautomatische Auffalt-, Verpackungs- und Palettiermaschine nach Anspruch 1, **gekennzeichnet dadurch, dass** der Übergangs-Querfördermechanismus (B12) und der Abgabe-Längsfördermechanismus (B14) fördernd durch einen zweiten Förderbandmechanismus (B13) verbunden sind; der zweite Förderbandmechanismus (B13) umfasst ein zweites Förderband (B130); der Übergangs-Querfördermechanismus (B12) umfasst mehrere Übergangs-Förderrollen (B120); das zweite Förderband (B130) befindet sich zwischen zwei Übergangs-Förderrollen (B120); der zweite Förderbandmechanismus (B13) ist mit einer zweiten Hubkraftquelle verbunden, und die zweite Hubkraftquelle bewegt den zweiten Förderbandmechanismus (B13) auf und ab.

4. Die vollautomatische Auffalt-, Verpackungs- und Palettiermaschine nach Anspruch 1, **gekennzeichnet dadurch, dass** die Kartonbox-Fördervorrichtung (A1) zwei synchronisierte Fördereinheiten (A11) links und rechts angeordnet umfasst; ein Kartonbox-Aufnahmeabstand ist zwischen den links und rechts angeordneten synchronisierten Fördereinheiten (A11) vorgesehen; eine stützende Bodenplatte (A12) ist zwischen den links und rechts angeordneten synchronisierten Fördereinheiten (A11) angeordnet; die synchronisierten Fördereinheiten (A11) umfassen jeweils zwei Förderbandmechanismen (A110) oben und unten angeordnet; jeder der Förderbandmechanismen (A110) umfasst ein Förderband (A1100); das Förderband (A1100) ist mit mehreren Kartonstoßelementen (A1101) in gleichmäßigem Abstand entlang einer Längsrichtung des Förderbands (A1100) versehen.

5. Die vollautomatische Auffalt-, Verpackungs- und Palettiermaschine nach Anspruch 1, **gekennzeichnet dadurch, dass** die Auffalt- und Verpackungsmaschine (A) eine Kartonfördervorrichtung (A2) umfasst; die Kartonfördervorrichtung (A2) hat dieselbe Förderrichtung wie die Kartonbox-Fördervorrichtung (A1); eine Karton-Selbstzufuhr-, Förder- und Anordnungsvorrichtung (A3) ist zwischen der Kartonfördervorrichtung (A2) und der Kartonbox-Fördervorrichtung (A1) vorgesehen; die Karton-Selbstzufuhr-, Förder- und Anordnungsvorrichtung (A3) umfasst einen Kartonstoßmechanismus (A32), eine Sortierplattform (A33) und einen Karton-Steuermechanismus (A34); der Karton-Steuermechanismus (A34) umfasst eine linke Steuerplatte (A340) und eine rechte Steuerplatte (A341) zum Klemmen von Kartons; ein Kartonbegrenzungsmechanismus (A35) ist über einem vorderen Ende der Kartonfördervorrichtung (A2) angeordnet; der Kartonbegrenzungsmechanismus (A35) umfasst eine vordere Blende (A350) und eine vordere Blendenkraftquelle (A351), wobei die vordere Blendenkraftquelle (A351) die vordere Blende (A350) zum Vor- und Zurückbewegen antreibt; die Sortierplattform (A33) befindet sich auf einer Seite der Kartonfördervorrichtung (A2); der Kartonstoßmechanismus (A32) umfasst eine Stoßplatte (A320) und eine Stoßplattenkraftquelle (A322), wobei die Stoßplattenkraftquelle (A322) die Stoßplatte (A320) dazu antreibt, die Kartons auf der Kartonfördervorrichtung (A2) zur Sortierplattform (A33) zu schieben.

6. Die vollautomatische Auffalt-, Verpackungs- und Palettiermaschine nach Anspruch 1, **gekennzeichnet dadurch, dass** die Auffalt- und Verpackungsmaschine (A) einen Kartonbox-Speicherbehälter (A4) umfasst; der Kartonbox-Speicherbehälter (A4) umfasst einen Behälterrahmen (A41); der Behälterrahmen (A41) ist mit einem vor- und rückwärts bewegbaren Zufuhrrahmen (A42) versehen; der Zufuhrrahmen (A42) ist mit zwei gegenüberliegenden Stützplattenkonstruktionen (A44) versehen; jede der Stützplattenkonstruktionen (A44) umfasst eine Stützplatte (A440) und eine Stützplattenwelle (A442); die Stützplattenwelle (A442) ist auf dem Zufuhrrahmen (A42) drehbar installiert; die Stützplatte (A440) ist mit der Stützplattenwelle (A442) verbunden; die Stützplattenwelle (A442) ist mit einem Verbindungselement (A441) verbunden; das Verbindungselement (A441) ist mit einem Ende einer Zugfeder (A443) verbunden, und das andere Ende der Zugfeder (A443) ist am Zufuhrrahmen (A42) befestigt; die Zugfeder (A443) treibt die Stützplatte (A440) zu einer inwärtigen Drehbewegung an; eine Zufuhrplattform (A45) ist unter dem Zufuhrrahmen (A42) angeordnet; die Zufuhrplattform (A45) ist mit einer Zufuhrkraftquelle verbunden, wobei die Zufuhrkraftquelle die Zufuhrplattform (A45) zum Auf- und Abbewegen antreibt.

7. Die vollautomatische Auffalt-, Verpackungs- und Palettiermaschine nach Anspruch 6, **gekennzeichnet dadurch, dass** ein Kartonbox-Aufbewahrungsmechanismus (A43) zwischen dem Zufuhrrahmen (A42) und der Zufuhrplattform (A45) angeordnet ist; der Kartonbox-Aufbewahrungsmechanismus (A43) umfasst zwei seitliche Blenden (A430), die vorne und hinten angeordnet sind; jede der beiden seitlichen Blenden (A430) ist mit einer Aufbewahrungsplattenkonstruktion versehen; die Aufbewahrungsplattenkonstruktion umfasst eine Aufbewahrungsplatte (A431), eine Aufbewahrungsplattenwelle (A432) und eine Aufbewahrungsplattenkraftquelle (A433), wobei die Aufbewahrungsplattenkraftquelle (A433) die Aufbewahrungsplattenwelle (A432) zu einer Drehbewegung antreibt; die Aufbewahrungsplatte (A431) ist mit der Aufbewahrungsplattenwelle (A432) verbunden; die Aufbewahrungsplatte (A431) verfügt über einen ersten Zustand, in dem sie in den Raum zwischen den linken und rechten seitlichen Blenden (A430) eintritt, sowie über einen zweiten Zustand, in dem sie aus dem Raum zwischen den linken und rechten seitlichen Blenden (A430) austritt; die beiden vorne und hinten angeordneten Aufbewahrungsplatten (A431) liegen einander gegenüber.

8. Die vollautomatische Auffalt-, Verpackungs- und Palettiermaschine gemäß Anspruch 1, **gekennzeichnet dadurch, dass** die Auffalt- und Verpackungsmaschine (A) eine Kartonbox-Auffaltvorrichtung (A5) umfasst; die Kartonbox-Auffaltvorrichtung (A5) umfasst einen Hubmechanismus (A51) und einen seitlichen Stützmechanismus (A52); der seitliche Stützmechanismus (A52) befindet sich auf einer Seite des Hubmechanismus (A51); der Hubmechanismus (A51) umfasst einen Vakuumsaugnapf (A511), einen Hubarm (A510) und eine Hubkraftquelle (A512), wobei die Hubkraftquelle (A512) den Hubarm (A510) dazu antreibt, sich um einen Drehpunkt auf und ab zu drehen; der Vakuumsaugnapf (A511) ist am Hubarm (A510) installiert; der seitliche Stützmechanismus (A52) umfasst eine seitliche Stützplatte (A521), einen vertikalen Pfosten (A520) und eine seitliche Stützkraftquelle (A522), wobei die seitliche Stützkraftquelle (A522) den vertikalen Pfosten (A520) dazu antreibt, sich um einen Drehpunkt nach links und rechts zu drehen; die seitliche Stützplatte (A521) ist mit dem vertikalen Pfosten (A520) verbunden; der Hubmechanismus (A51) und der seitliche Stützmechanismus (A52) sind auf einem Kartonfördergleitkörper (A53) installiert; der Kartonfördergleitkörper (A53) ist gleitend auf einem Rahmen angeordnet; der Kartonfördergleitkörper (A53) ist treibend an eine Kartonförderkraftquelle (A54) angeschlossen, wobei die Kartonförderkraftquelle (A54) den Kartonfördergleitkörper (A53) zum Gleiten antreibt.

9. Die vollautomatische Auffalt-, Verpackungs- und Palettiermaschine gemäß Anspruch 1, **gekennzeichnet dadurch, dass** eine Seitenabdeckung-Auffaltvorrichtung (A8) oberhalb der Kartonbox-Fördervorrichtung (A1) angeordnet ist; die Seitenabdeckung-Auffaltvorrichtung (A8) umfasst eine feste Basis (A80) und eine Auffalt-Stangenkonstruktion; die Auffalt-Stangenkonstruktion umfasst eine Auffaltstange (A83), eine kleine Verbindungsstange (A86) und eine Rolle (A87); die Auffaltstange (A83) ist mit einem Verbindungsstangenteil (A830) und einem Betätigungsstangenteil (A831) versehen; das Verbindungsstangenteil (A830) und das Betätigungsstangenteil (A831) definieren einen eingeschlossenen Winkel; das Verbindungsstangenteil (A830) der Auffaltstange (A83) ist drehbar auf der festen Basis (A80) installiert; das Verbindungsstangenteil (A830) der Auffaltstange (A83) ist mit einem Ende der kleinen Verbindungsstange (A86) verbunden, und die Rolle (A87) ist mit dem anderen Ende der kleinen Verbindungsstange (A86) verbunden; die Rolle (A87) befindet sich in einem länglichen Schlitz (A89) eines Hubblocks (A88); der Hubblock (A88) ist treibend mit einer Seitenabdeckung-Auffaltkraftquelle (A82) verbunden, wobei die Seitenabdeckung-Auffaltkraftquelle (A82) den Hubblock (A88) dazu antreibt, sich auf und ab zu bewegen; die Seitenabdeckung-Auffaltkraftquelle (A82) ist auf der festen Basis (A80) installiert.

10. Die vollautomatische Auffalt-, Verpackungs- und Palettiermaschine gemäß Anspruch 1, **gekennzeichnet dadurch, dass** an einer Seite der Kartonbox-Fördervorrichtung (A1) ein Partitions-Speicherbehälter (A9) angebracht ist; der Partitions-Speicherbehälter (A9) umfasst einen Behälterrahmen (A91); der Behälterrahmen (A91) ist mit zwei links und rechts angeordneten Behältereinschlussmechanismen versehen; jeder der Behältereinschlussmechanismen umfasst zwei vorne und hinten angeordnete Behältereinschlusskonstruktionen (A92); jede der Behältereinschlusskonstruktionen (A92) umfasst ein Behältereinschlusselement (A920) und eine Schleppplatte (A921), wobei die Schleppplatte (A921) auf dem Behältereinschlusselement (A920) installiert ist; ein Partitionshebemechanismus (A93) ist zwischen den vorne und hinten angeordneten Behältereinschlusskonstruktionen (A92) jedes Behältereinschlussmechanismus angebracht; der Partitionshebemechanismus (A93) umfasst einen synchronen Riemen (A930) und zwei synchronisierte Räder; der synchrone Riemen (A930) ist auf den synchronisierten Rädern aufgewickelt; der synchrone Riemen (A930) ist mit einem Hebeteil (A931) versehen; die synchronisierten Räder sind treibend mit einer Hubkraftquelle verbunden, wobei die Hubkraftquelle die synchronisierten Räder zum Drehen antreibt.

## Revendications

1. Machine de dépliage, d'emballage et de palettisation entièrement automatique, comprenant une machine de dépliage et d'emballage (A) et une machine de palettisation de cartons (B), dans laquelle la machine de dépliage et d'emballage (A) comprend un dispositif de transport de boîtes en carton (A1) ; la machine de palettisation de cartons (B) comprend un manipulateur de palettisation (B2) et un dispositif de palettisation et de transport (B 1) ; le dispositif de palettisation et de transport (B 1) est situé à l'avant du manipulateur de palettisation (B2) ; le dispositif de palettisation et de transport (B1) comprend un mécanisme de transport transversal d'alimentation (B10) ; une extrémité d'alimentation du mécanisme de transport transversal d'alimentation (B10) est reliée à une extrémité de décharge du dispositif de transport de boîtes en carton (A1) ; un côté du mécanisme de transport transversal d'alimentation (B 10) est pourvu d'un mécanisme de transport transversal de transition (B 12) ; le mécanisme de transport transversal de transition (B 12) et le mécanisme de transport transversal d'alimentation (B 10) sont reliés de manière à assurer le transport ; un côté du mécanisme de transport transversal de transition (B 12) est pourvu d'un mécanisme de transport longitudinal de déchargement (B14) ; le mécanisme de transport longitudinal de déchargement (B14) et le mécanisme de transport transversal de transition (B12) sont reliés de manière à assurer le transport ; un premier espace de palettisation (B7) et un second espace de palettisation (B8) sont prévus ; le manipulateur de palettisation (B2) est configuré pour transférer les cartons du mécanisme de transport longitudinal de déchargement (B14) vers le premier espace de palettisation (B7) et le second espace de palettisation (B8), **caractérisé par le fait que,**
le mécanisme de transport transversal d'alimentation (B10) et le mécanisme de transport longitudinal de déchargement (B 14) sont tous deux situés devant le mécanisme de transport transversal de transition (B12) de sorte que le mécanisme de transport transversal de transition (B 12) est situé entre le manipulateur de palettisation (B2) et le mécanisme de transport longitudinal de déchargement (B 14),
dans lequel le premier espace de palettisation (B7) est situé entre un côté du mécanisme de transport longitudinal de déchargement (B14) et le mécanisme de transport transversal d'alimentation (B 10) ; et le second espace de palettisation (B8) est situé de l'autre côté du mécanisme de transport longitudinal de déchargement (B 14), de sorte que le premier espace de palettisation (B7) et le second espace de palettisation (B8) sont répartis de part et d'autre d'un point de déchargement du mécanisme de transport longitudinal de déchargement (B14).

2. La machine de dépliage, d'emballage et de palettisation entièrement automatique selon la revendication 1, **caractérisée en ce que** le mécanisme de transport transversal de transition (B12) et le mécanisme de transport transversal d'alimentation (B10) sont reliés de manière à être transportés par un premier mécanisme de bande transporteuse (B11) ; le premier mécanisme de bande transporteuse (B11) comprend une première bande transporteuse (B 110) ; le mécanisme de transport transversal d'alimentation (B 10) comprend de multiples rouleaux de transport d'alimentation (B100); le mécanisme de transport transversal de transition (B12) comprend plusieurs rouleaux de transport de transition (B120) ; la première bande transporteuse (B110) s'étend d'un espace entre deux rouleaux de transport d'alimentation (B100) à un espace entre deux rouleaux de transport de transition (B120); le premier mécanisme de bande transporteuse (B1 1) est relié par entraînement à une première source d'énergie de levage, et la première source d'énergie de levage entraîne le premier mécanisme de bande transporteuse (B1 1) pour qu'il se déplace vers le haut et vers le bas.

3. La machine de dépliage, d'emballage et de palettisation entièrement automatique selon la revendication 1, **caractérisée en ce que** le mécanisme de transport transversal de transition (B12) et le mécanisme de transport longitudinal de déchargement (B14) sont reliés de manière à être transportés par un deuxième mécanisme de bande transporteuse (B13) ; le deuxième mécanisme de bande transporteuse (B13) comprend une deuxième bande transporteuse (B130) ; le mécanisme de transport transversal de transition (B12) comprend plusieurs rouleaux de transport de transition (B120); la deuxième bande transporteuse (B130) est située entre deux rouleaux de transport de transition (B120) ; le deuxième mécanisme de bande transporteuse (B13) est relié par entraînement à une deuxième source d'énergie de levage, et la deuxième source d'énergie de levage entraîne le deuxième mécanisme de bande transporteuse (B13) pour qu'il se déplace vers le haut et vers le bas.

4. La machine de dépliage, d'emballage et de palettisation entièrement automatique selon la revendication 1, **caractérisée en ce que** le dispositif de transport de boîtes en carton (A1) comprend deux unités de transport synchrones (A11) disposées à gauche et à droite ; un espace de logement des cartons est prévu entre les unités de transport synchrones gauche et droite (A11) ; une plaque inférieure de support (A12) est prévue entre les unités de transport synchrones gauche et droite (A11) ; les unités de transport synchrones (A11) comprennent chacune deux mécanismes de bande transporteuse (A110) disposés en haut et en bas ; chacun des mécanismes de bande transporteuse (A110) comprend une bande transporteuse (A1100) ; la bande transporteuse (A1100) est pourvue de plusieurs éléments de poussée de carton (A1101) également espacés le long de la bande transporteuse (A1100).

5. La machine de dépliage, d'emballage et de palettisation entièrement automatique selon la revendication 1, **caractérisée en ce que** la machine de dépliage et d'emballage (A) comprend un dispositif de transport de cartons (A2) ; le dispositif de transport de cartons (A2) a la même direction de transport que le dispositif de transport de boîtes en carton (A1) ; un dispositif d'auto-alimentation, de transport et de rangement de cartons (A3) est prévu entre le dispositif de transport de cartons (A2) et le dispositif de transport de boîtes en carton (A1) ; le dispositif d'alimentation, de transport et de rangement des cartons (A3) comprend un mécanisme de poussée des cartons (A32), une plate-forme de tri (A33) et un mécanisme de commande des cartons (A34) ; le mécanisme de commande des cartons (A34) comprend une plaque de commande gauche (A340) et une plaque de commande droite (A341) pour serrer les cartons ; un mécanisme de limitation des cartons (A35) est prévu au-dessus d'une extrémité avant du dispositif de transport de cartons (A2) ; le mécanisme de limitation des cartons (A35) comprend un déflecteur avant (A350) et une source d'alimentation du déflecteur avant (A351), et la source d'alimentation du déflecteur avant (A351) entraîne le déflecteur avant (A350) pour qu'il se déplace vers l'avant et vers l'arrière ; la plate-forme de tri (A33) est située sur un côté du dispositif de transport de cartons (A2) ; le mécanisme de poussée des cartons (A32) comprend une plaque de poussée (A320) et une source d'alimentation de la plaque de poussée (A322), et la source d'alimentation de la plaque de poussée (A322) entraîne la plaque de poussée (A320) pour pousser les cartons sur le dispositif de transport de cartons (A2) jusqu'à la plate-forme de tri (A33).

6. La machine de dépliage, d'emballage et de palettisation entièrement automatique selon la revendication 1, **caractérisée en ce que** la machine de dépliage et d'emballage (A) comprend un bac de stockage de boîtes en carton (A4) ; le bac de stockage de boîtes en carton (A4) comprend un cadre de bac (A41) ; le cadre de bac (A41) est pourvu d'un cadre d'alimentation (A42) mobile vers l'avant et vers l'arrière ; le cadre d'alimentation (A42) est pourvu de deux ensembles de plaques de support opposés (A44) ; chacun des ensembles de plaques de support (A44) comprend une plaque de support (A440) et un arbre de plaque de support (A442) ; l'arbre de plaque de support (A442) est installé de manière rotative sur le cadre d'alimentation (A42) ; la plaque de support (A440) est reliée à l'arbre de la plaque de support (A442) ; l'arbre de la plaque de support (A442) est relié à une pièce de liaison (A441) ; la pièce de liaison (A441) est reliée à une extrémité d'un ressort de tension (A443), et l'autre extrémité du ressort de tension (A443) est reliée au cadre d'alimentation (A42) ; le ressort de tension (A443) entraîne la plaque de support (A440) à tourner vers l'intérieur ; une plate-forme d'alimentation (A45) est prévue sous le cadre d'alimentation (A42) ; la plate-forme d'alimentation (A45) est connectée à une source d'alimentation, et la source d'alimentation entraîne la plate-forme d'alimentation (A45) à se déplacer vers le haut et vers le bas.

7. La machine de dépliage, d'emballage et de palettisation entièrement automatique selon la revendication 6, **caractérisée en ce qu'**un mécanisme de stockage de boîtes en carton (A43) est prévu entre le cadre d'alimentation (A42) et la plate-forme d'alimentation (A45) ; le mécanisme de stockage de boîtes en carton (A43) comprend deux déflecteurs latéraux (A430) disposés à l'avant et à l'arrière ; chacun des deux déflecteurs latéraux (A430) est pourvu d'un ensemble de plaque de stockage ; l'ensemble de plaque de stockage comprend une plaque de stockage (A431), un arbre de plaque de stockage (A432) et une source d'énergie de plaque de stockage (A433), et la source d'énergie de plaque de stockage (A433) entraîne l'arbre de plaque de stockage (A432) en rotation ; la plaque de stockage (A431) est reliée à l'arbre de plaque de stockage (A432) ; la plaque de stockage (A431) a un premier état d'entrée dans un espace entre les déflecteurs latéraux gauche et droit (A430) et un second état de sortie de l'espace entre les déflecteurs latéraux gauche et droit (A430) ; les deux plaques de stockage (A431) disposées à l'avant et à l'arrière sont opposées l'une à l'autre.

8. La machine de dépliage, d'emballage et de palettisation entièrement automatique selon la revendication 1, **caractérisée en ce que** la machine de dépliage et d'emballage (A) comprend un dispositif de dépliage de boîtes en carton (A5) ; le dispositif de dépliage de boîtes en carton (A5) comprend un mécanisme de levage (A51) et un mécanisme de support latéral (A52) ; le mécanisme de support latéral (A52) est situé d'un côté du mécanisme de levage (A51) ; le mécanisme de levage (A51) comprend une ventouse (A511), un bras de levage (A510) et une source d'énergie de levage (A512), et la source d'énergie de levage (A512) entraîne le bras de levage (A510) à tourner de haut en bas autour d'un point de rotation ; la ventouse (A511) est installée sur le bras de levage (A510) ; le mécanisme de support latéral (A52) comprend une plaque de support latéral (A521), un montant vertical (A520) et une source d'énergie de support latéral (A522), et la source d'énergie de support latéral (A522) entraîne le montant vertical (A520) à tourner à gauche et à droite autour d'un point de rotation ; la plaque de support latéral (A521) est connectée au montant vertical (A520) ; le mécanisme de levage (A51) et le mécanisme de support latéral (A52) sont installés sur une glissière de transport de boîtes en carton (A53) ; la glissière de transport de boîtes en carton (A53) est montée coulissante sur un cadre ; la glissière de transport de boîtes en carton (A53) est reliée à une source d'énergie de transport de boîtes en carton (A54), et la source d'énergie de transport de boîtes en carton (A54) entraîne la glissière de transport de boîtes en carton (A53) dans son mouvement.

9. La machine de dépliage, d'emballage et de palettisation entièrement automatique selon la revendication 1, **caractérisée en ce que**, un dispositif de dépliage du couvercle latéral (A8) est prévu au-dessus du dispositif de transport de boîtes en carton (A1) ; le dispositif de dépliage du couvercle latéral (A8) comprend une base fixe (A80) et un ensemble de tige de dépliage ; l'ensemble de tige de dépliage comprend une tige de dépliage (A83), une petite bielle (A86) et un rouleau (A87) ; la tige de dépliage (A83) est pourvue d'une pièce de bielle (A830) et d'une pièce de bielle d'actionnement (A831) ; la pièce de bielle (A830) et la pièce de bielle d'actionnement (A831) définissent un angle inclus ; la pièce de bielle (A830) de la tige de dépliage (A83) est installée de manière rotative sur la base fixe (A80) ; la pièce de bielle (A830) de la tige de dépliage (A83) est reliée à une extrémité de la petite bielle (A86), et le rouleau (A87) est relié à l'autre extrémité de la petite bielle (A86) ; le rouleau (A87) est situé dans une fente allongée (A89) d'un bloc de levage (A88) ; le bloc de levage (A88) est relié par entraînement à une source d'énergie de dépliage du couvercle latéral (A82), et la source d'énergie de dépliage du couvercle latéral (A82) entraîne le bloc de levage (A88) à se déplacer vers le haut et vers le bas ; la source d'énergie de dépliage du couvercle latéral (A82) est installée sur la base fixe (A80).

10. La machine de dépliage, d'emballage et de palettisation entièrement automatique selon la revendication 1, **caractérisée en ce qu'**un côté du dispositif de transport de boîtes en carton (A1) est pourvu d'un compartiment de stockage (A9) ; le compartiment de stockage (A9) comprend un cadre de compartiment (A91) ; le cadre de compartiment (A91) est pourvu de deux mécanismes d'enfermement de compartiment disposés à gauche et à droite ; chacun des mécanismes de fermeture de compartiment comprend deux ensembles de fermeture de compartiment (A92) disposés à l'avant et à l'arrière ; chacun des ensembles de fermeture de compartiment (A92) comprend un élément de fermeture de compartiment (A920) et une plaque de suivi (A921), et la plaque de suivi (A921) est installée sur l'élément de fermeture de compartiment (A920) ; un mécanisme de levage de cloison (A93) est prévu entre les ensembles de fermeture de compartiment (A92) avant et arrière de chacun des mécanismes de fermeture de compartiment ; le mécanisme de levage de cloison (A93) comprend une courroie synchrone (A930) et deux roues synchrones ; la courroie synchrone (A930) est enroulée sur les roues synchrones ; la courroie synchrone (A930) est pourvue d'une pièce de levage (A931) ; les roues synchrones sont reliées par entraînement à une source d'énergie de levage, et la source d'énergie de levage entraîne la rotation des roues synchrones.
